Europäisches Patentamt

European Patent Office

Office européen des brevets

Publication number: **0 289 991**
**A2**

# EUROPEAN PATENT APPLICATION

Application number: 88107100.5

Date of filing: 03.05.88

Int. Cl.⁴ **C10G 11/18** , **B01J 8/26** ,
**F16L 41/00**

Priority: 07.05.87 US 47380

Date of publication of application:
09.11.88 Bulletin 88/45

Designated Contracting States:
DE FR GB IT

Applicant: AIR PRODUCTS AND CHEMICALS,
INC.
P.O. Box 538
Allentown, Pennsylvania 18105(US)

Inventor: Murphy, James Richard
3440 Congress Street
Allentown, PA 18104(US)
Inventor: DeLaney, Thomas Joseph
2 Applewood Lane
Fogelsville, PA 18051(US)
Inventor: Johnson Tiffin Elmore
4950 Bridlepath Drive
Macungie, PA 18062(US)
Inventor: Broadhurst, Gerald
Box 82
Maxatawny, PA 19538(US)
Inventor: Skopp, Stephen richard
171 Camp Council Rd.
Phoenixville, PA 19460(US)
Inventor: Nuesslein, Lawrence Adam, Jr.
1208 Walnut Street
Allentown, PA 18102(US)

Representative: Dipl.-Ing. Schwabe, Dr. Dr.
Sandmair, Dr. Marx
Stuntzstrasse 16
D-8000 München 80(DE)

Fluid catalytic cracking unit catalyst transfer and distribution system and process.

The present invention relates to an improvement to a process for the catalytic cracking of a hydrocarbon feed in a fluid catalytic cracking unit. The improvement comprises using a regenerator which is side by side with the reactor in the fluid catalytic cracking unit, wherein combustion air is introduced into the bottom of the regenerator for forming a fluidized bed characterized as being rich in oxygen in the lower portion of the fluidized bed and essentially depleted of oxygen in the upper portion of the fluidized bed; and introducing and distributing the spent catalyst to the upper portion of the fluidized bed of the regenerator, wherein the air used for combustion is essentially depleted of oxygen, thereby allowing the coke on the spent catalyst to burn off at a controlled rate such that the catalyst temperature is maintained at a level to avoid sintering of the catalyst and to prevent the release of steam in the lower portion of the fluidized bed. The present invention also relates to an apparatus for accomplishing the process in an FCC unit. Finally, the present invention relates to a slide joint to accommodate thermal expansions of the apparatus for accomplishing the process of the present invention.

FIG.2

# FLUID CATALYTIC CRACKING UNIT CATALYST TRANSFER AND DISTRIBUTION SYSTEM AND PROCESS

## TECHNICAL FIELD OF THE INVENTION

The present invention relates to a process and apparatus for regenerating spent catalyst in fluid catalytic cracking. The present invention also relates to a slide joint for accommodating thermal stresses and expansions of the apparatus for regenerating spent catalyst.

## BACKGROUND OF THE INVENTION

Catalysts employed in hydrocarbon conversion processes become partially deactivated due to carbonaceous deposits accumulating on the catalyst surface. Various methods for regenerating the catalyst by combustion with an oxidizing gas have been developed.

U.S. Pat. No. 3,902,990 discloses a process for regenerating spent catalyst contaminated by carbonaceous deposits by contacting the spent catalyst with a hot flue gas emanating from a first dense phase regeneration zone. The heated spent catalyst is then contacted counter-currently with an oxygen-containing gas in the first dense phase regeneration zone to produce partially regenerated catalyst which is subsequently contacted concurrently with an oxygen-containing gas in a second dense phase regeneration zone.

In accordance with this process, hydrocarbons which are contained in the void spaces of spent catalysts are removed by stripping with a stripping gas in a zone located outside of the regenerator. The stripped spent catalyst then flows from the stripping zone through a conduit and into the regeneration vessel. The spent catalyst is discharged in the upper regions of the vessel and flows in a downward direction and is contacted by a hot upflowing flue gas which combusts the coke and heats the catalyst. The heated catalyst then continues to flow down into the dense fluidized regeneration bed for further heating and oxidation of the carbonaceous material.

U.S. Pat. No. 3,904,548 discloses a method and system for recovering compounds deposited on catalysts in the hydrocarbon phase and effecting regeneration of catalyst particles in a swirl-type dense fluid catalyst bed regeneration operation. These objectives are accomplished by limiting the volume of regeneration gas brought in contact with the catalyst in selected vertical segments of the regeneration zone. The regeneration zone is supplied with regeneration gas in the lower portion thereof by a plurality of radiating distributing grids or segments individually controlled with respect to the volume of regenerating gas desired to be passed through any given segment.

U.S. Pat. No. 4,150,090 discloses an apparatus for regenerating spent catalyst. The apparatus incorporates a closed vessel having a centered stand pipe concentrically arranged within a spent catalyst distributor. The catalyst is carried upwardly by the distributor and is scattered evenly and concentrically about the distributor. The spent catalyst is deposited on or near the top of a dense phase catalyst bed by a plurality of radially extending catalyst distributor arms or troughs. Conduits convey a fluid such as steam to each of the radial arms to fluidize the catalyst particles and eject at least a portion of the catalyst at various points equally disposed around the circumference of a circle, thereby providing better catalyst distribution into the dense phase catalyst bed. A symmetrically arranged air distributor system, which includes a number of transverse branches having small nozzles mounted thereon, form a grid pattern below the lower portions of the catalyst bed in the regenerator to provide air for burning the coke on the spent catalyst.

U.S. Pat. Nos. 4,353,812, 4,434,245 and 4,439,533 all disclose a process and related apparatus for regenerating and cooling hot fluidized catalysts. The spent catalysts entering the regenerator are dispersed to the dense fluid bed by being deflected off a horizontal surface located above the catalyst inlet. The particles then flow from the dense phase fluidized bed into the shell side of a vertically oriented shell and tube heat exchanger where cooling occurs via indirect heat exchange with a cooling media circulating in the tubes. The cooled catalyst particles reenter the regenerator for further treatment before being discharged.

U.S. Pat. No. 4,615,992 provides for a process and associated apparatus for limiting the vertical mixing of catalyst in a fluidized catalyst regenerator so that spent catalyst entering the regenerator will remain at the top of the fluidized bed for a longer period of time. This is accomplished by employing a generally horizontally placed baffle device located between 2 ft.-4 ft. below the catalyst bed level in the regenerator.

## SUMMARY OF THE INVENTION

The present invention relates to an improvement to a process for the catalytic cracking of a hydrocarbon feed, the hydrocarbon feed selected from the group consisting of gas oil, vacuum gas oil, cycle oil, residua, cracked stocks and mixtures thereof, in a fluid catalytic cracking (FCC) unit having a fluidized bed regenerator and a reactor. The hydrocarbon feed is contacted with a cracking catalyst at elevated temperatures thus cracking a majority of the hydrocarbon feed to distillate products and in addition producing a spent catalyst laden with coke (stripped of occuled hydrocarbons). The spent catalyst is removed from the reactor and is regenerated by combustion with air in the regenerator, and the regenerated catalyst is recycled to the reactor. The improvement to the invention comprises using a regenerator which is side by side with the reactor in the fluid catalytic cracking unit, wherein air is introduced into the bottom of the regenerator for forming a fluidized bed characterized as being rich in oxygen in the lower portion of the fluidized bed and essentially depleted of oxygen in the upper portion of the fluidized bed; and introducing and distributing the spent catalyst to the upper portion of the fluidized bed of the regenerator, wherein the air used for combustion is essentially depleted of oxygen. In operating the process in such a manner, the coke on the spent catalyst is allowed to burn off at a controlled rate, thus the catalyst temperature is maintained at a level which avoids sintering of the catalyst and prevents the release of steam in the lower portion of the fluidized bed.

The present invention also relates to an apparatus for accomplishing the process in an FCC unit. Finally the present invention relates to a slide joint to accommodate thermal expansions of the apparatus for accomplishing the utilization of the process of the present invention.

## BRIEF DESCRIPTION OF THE DRAWING

Figure 1 is a schematic drawing of a side by side FCC unit with tangential feed of the spent catalyst into the regenerator.

Figure 2 is a schematic drawing of a side by side FCC unit according to a first embodiment of the present invention.

Figure 3 is a schematic drawing detailing the lower portion of the regenerator shown in Figure 2.

Figure 4 is a schematic drawing of a side by side FCC unit according to a second embodiment of the present invention.

Figure 5 is a schematic drawing detailing the lower portion of the regenerator shown in Figure 4.

Figure 6 is a schematic drawing of a side by side FCC unit according to a third embodiment of the present invention.

Figure 7 is a schematic drawing of a side by side FCC unit according to a fourth embodiment of the present invention.

Figure 8 is a schematic drawing detailing the standpipe-center liftwell juncture.

Figure 9 is a drawing of the slide joint of the present invention.

## DETAILED DESCRIPTION OF THE INVENTION

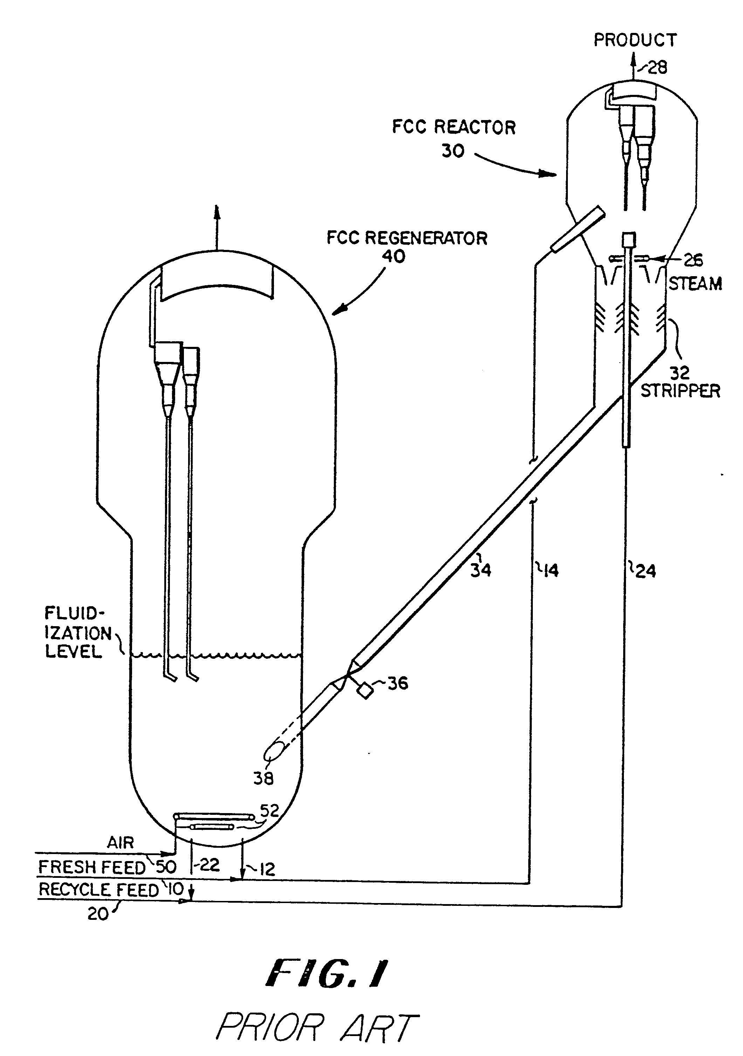

A number of the early FCC designs had introduction of spent catalyst to the regenerator at one point at the wall of the regenerator. Although there are a number of designs with single-point catalyst distribution, they differ otherwise in their mechanical design and air distribution system. A schematic of a typical unit is shown in Figure 1.

With reference to Figure 1, fresh feed is introduced in the process via line 10. After introduction into the process, the fresh feed is combined with regenerated fluid catalyst which exits regenerator 40 via line 12 to form a combined fresh feed/catalyst reactor feed stream. This combined fresh feed/catalyst stream is then fed to FCC reactor 30 via riser 14. In addition to the fresh feed, recycle feed introduced into the process via line 20 is united with regenerated catalyst exiting regenerator 40 via line 22 to form a recycle feed/catalyst reactor feed stream, which is fed to FCC reactor 30 via riser 24. Additionally, steam is introduced into FCC reactor 30 via line 26 to maintain proper fluidization in FCC reactor 30. The fresh feed and recycle streams are catalytically cracked in risers 14 and 24 and in FCC reactor 30, converting a predominantly 650°F plus hydrocarbon feedstock into distillate products. The distillate product is removed from FCC reactor 30 in line 28.

The spent catalyst is separated from the hydrocarbon-catalyst mixture in stripper section 32 of FCC reactor 30 and is then fed to standpipe 34 for transport to regenerator 40. In standpipe 34. the spent catalyst flows by gravity from the bottom of stripper section 32 of FCC reactor 30 to its entrance into regenerator 40 via tangential opening 38. Flow in standpipe is controlled via slide valve 36.

As mentioned earlier, the spent catalyst is tangentially fed to a lower portion of regenerator 40. Inside regenerator 40 the spent catalyst is combusted with air which is fed to regenerator via line 50 and distributed in regenerator 40 with air distribution rings 52. In regenerator 40. the spent catalyst is regenerated and subsequently recycled along with the feed streams to FCC reactor 30.

Unfortunately, with the advent of complete CO combustion, operational problems for these types of units occurred. Because complete CO combustion required increased air rates, and because operation of the FCC process was resulting in increased heat release per pound of coke, regenerator temperatures increased to 1300-1350°F. This concentrated coke and the high air rate leads to a rapid initial burning rate at the inlet location, e.g. opening 38 of Figure 1, which results in excessive particle temperatures and increased deactivation. Particle temperatures can be 200 to 400°F higher than the average bed temperatures.

The initial burning rate in this area is so high that oxygen is rapidly depleted, and CO is formed. In regions remote to the spent catalyst introduction point, the carbon on catalyst is lower and results in high amounts of excess oxygen above the bed. When the CO-containing stream meets the oxygen-containing stream, afterburning results.

In the past several solutions to the problems associated with the single-point catalyst distribution have been offered, these solutions were offered at the 1985 Question and Answer Session of the NPRA, among these solutions was the following:

One unit with a tangential spent catalyst entry and which operates in full CO combustion mode exhibited some evidence of some CO breaking through the bed since the flue gas temperatures was always some 60-80°F higher than in the dense and dilute phases. To overcome this temperature difference between the flue gas and the bed, additional CO combustion promoters were added. Unfortunately, the temperature difference was not reduced even by stepping up promoter additions.

The present invention provides a solution to the above problems through an arrangement of standpipes, liftwells, sealwells and a catalyst distributor, in addition to a special mechanical feature which provides for the large thermal growth of the components of the apparatus under regeneration temperatures.

Basically, the present invention is an improvement to a process for the fluid catalytic cracking of a hydrocarbon feedstream which utilizes a side by side fluid catalytic cracking unit design for its reactor and regenerator. The improvement to the process comprises the transporting of the spent catalyst from the stripper section of the reactor to a liftwell located in the axial center of the regenerator and, generally but not necessarily, supported on the bottom of the regenerator or the wall of the regenerator. The spent catalyst is then lifted from the bottom of the liftwell to a catalyst distributor, which in most cases is a series of downwardly sloping troughs with an aeration source located in each trough, for a moderately uniform distribution of the spent catalyst into the upper portion of the regenerator fluidized bed. This improvement to the process allows for the uniform distribution of the catalyst at the top of the regenerator fluidized bed where the combustion air is essentially depleted of oxygen. This initial contact with depleted oxygen combustion air allows the coke on the spent catalyst to burn off at a slow controlled rate, thus keeping particle temperatures at a reasonable level to avoid sintering and allow the release of steam in the upper part of the fluidized bed, thus minimizing contact of the steam with the high temperature catalyst in the lower part of the bed.

As the catalyst moves downward through the fluidized bed, it encounters ever higher oxygen levels which are paired with the ever decreasing carbon levels on the spent catalyst. This combination of increasing oxygen concentrations and decreasing carbon levels results in an optimum regeneration effect, which maintains catalyst activity at the highest possible level by minimizing particle temperature and hydrothermal deactivation.

The present invention is also an improvement to the process by allowing the excess oxygen required to suppress CO afterburning above the bed to be minimized. This gives more coke burning capacity per pound of combustion air so that higher conversion or increased throughput can be achieved for a fixed amount of combustion air available. Alternatively, capital investment for the air blower is minimized for a predetermined conversion and throughput rate.

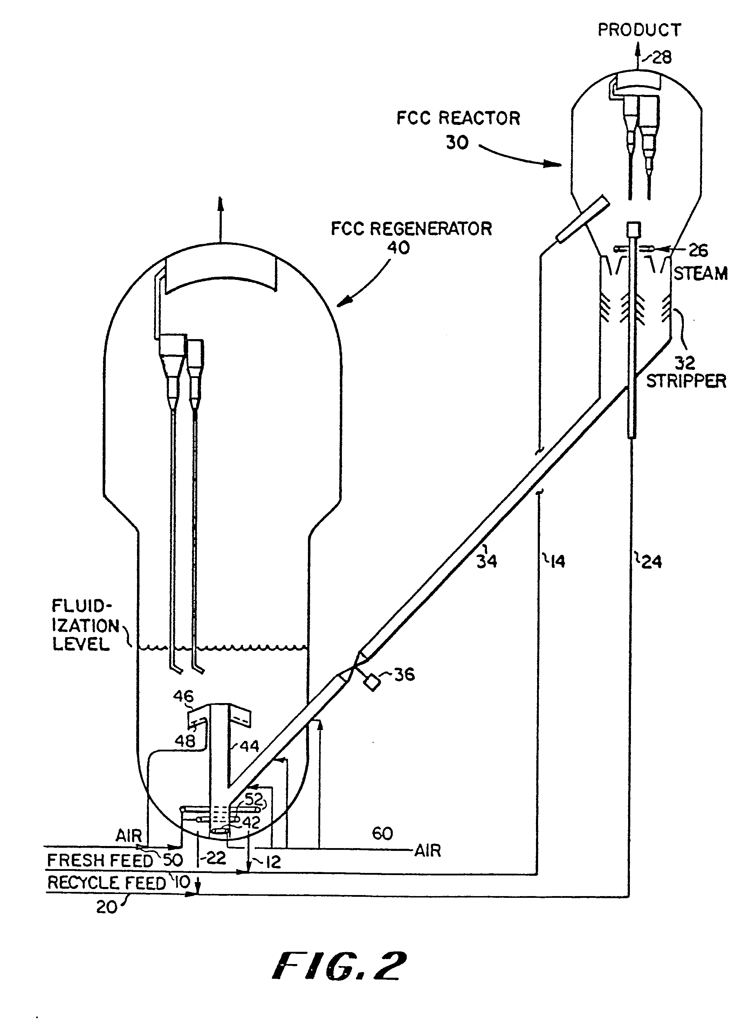

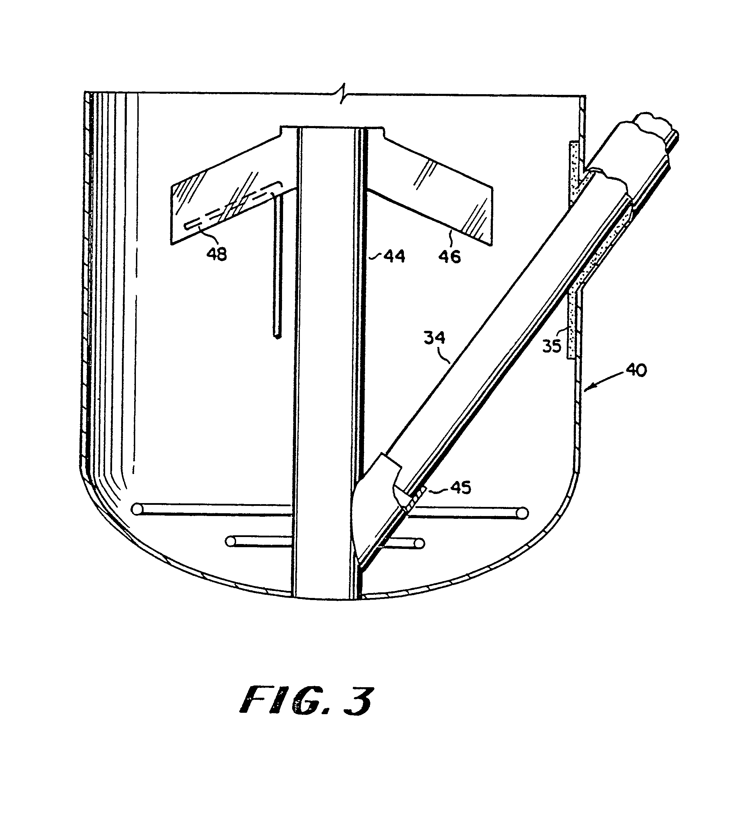

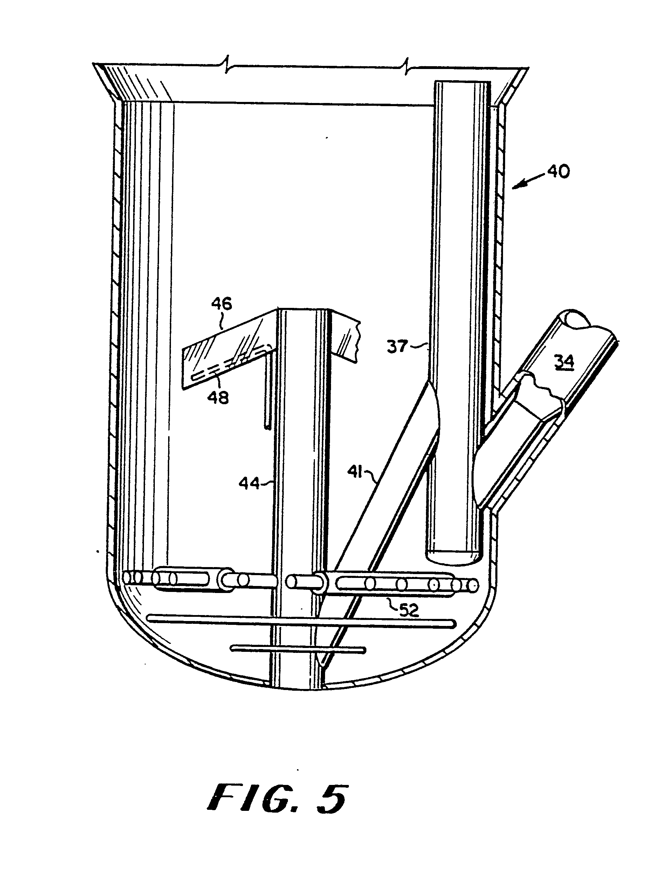

Several configurations of the process are possible; four such are shown in Figures 2, 4, 6 and 7. Figures 3 and 5 further detail the liftwell region of the regenerator. Figures 2-7 and Figure 1 utilizes common numbers for common features.

## Configuration 1

With reference to Figure 2, fresh feed is introduced in the process via line 10. After introduction into the process, the fresh feed is combined with regenerated fluid catalyst which exits regenerator 40 via line 12 to form a combined fresh feed/catalyst reactor feed stream. This combined fresh feed/catalyst stream is then fed to FCC reactor 30 via riser 14. In addition to the fresh feed, recycle feed introduced into the process via line 20 is united with regenerated catalyst exiting regenerator 40 via line 22 to form a recycle feed/catalyst reactor feed stream, which is fed to FCC reactor 30 via riser 24. Additionally, steam is introduced into FCC reactor 30 via line 26 to maintain proper fluidization in FCC reactor 30. The fresh feed and recycle streams are catalytically cracked in risers 14 and 24 and in FCC reactor 30. converting a predominantly 650°F plus hydrocarbon feedstock into distillate products. The distillate product is removed from FCC reactor 30 in line 28.

The spent catalyst is separated from the hydrocarbon/catalyst mixture in stripper section 32 of FCC reactor 30 and is then fed to standpipe 34 for transport to regenerator 40. In standpipe 34, the spent catalyst flows from the bottom of stripper section 32 of FCC reactor 30 to the bottom of center liftwell 44 in the radial center of regenerator 40. Flow in standpipe 34 is controlled via slide valve 36.

Fluidization air is provided to the bottom of the liftwell through air distributor 42. Fluidization air provided to air distributor 42 and to aid the flow of the spent catalyst in standpipe 34 is provided via line 60. Once the spent catalyst is lifted to the top of liftwell 44, it is fed to catalyst distributor 46. Catalyst distributor 46 can be of any type or design, examples of catalyst distributors are disclosed in U.S. pat. Nos. 4,150,090 and 4,615,992, which are incorporated herein by reference. Although any type of catalyst distributor can be used, the preferred distributor is a series of radially extending, downward sloping troughs. The catalyst flows down the troughs and is dispersed into the fluidized bed of regenerator 40 via fluidizing air which has been introduced into the bottom of troughs via air lines 48. Inside regenerator 40 the spent catalyst is then combusted with air which is fed to regenerator via line 50 and distributed in regenerator 40 with air distribution rings 52. In regenerator 40, the spent catalyst is regenerated and subsequently recycled along with the feed streams to FCC reactor 30.

With reference to Figure 3, a detail of the lower portion of regenerator 40 is offered. In Figure 3, a more detailed representation of internal liftwell 44 and catalyst distributor 46 are shown.

## Configuration 2

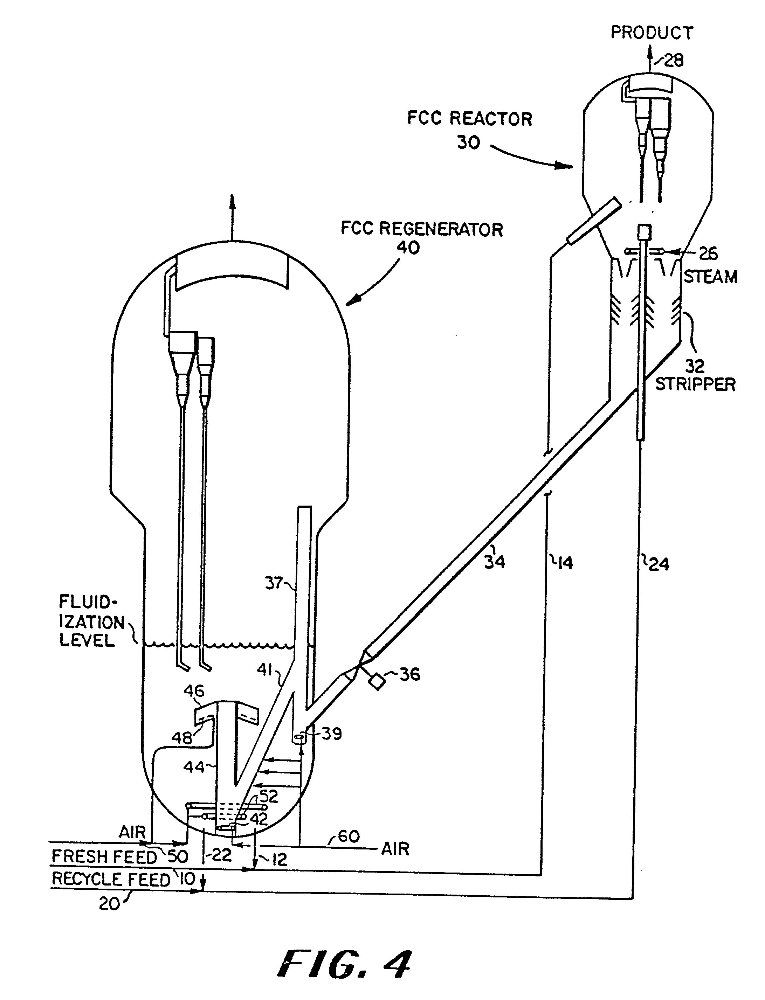

Another configuration of the present invention is to utilize a second internal liftwell to aid in transporting the spent catalyst from stripper section 32 of reactor 30 to the bottom of the center internal liftwell. With reference to Figure 4, fresh feed is introduced in the process via line 10. After introduction into the process, the fresh feed is combined with regenerated fluid catalyst which exits regenerator 40 via line 12 to form a combined fresh feed/catalyst reactor feed stream. This combined fresh feed/catalyst stream is then fed to FCC reactor 30 via riser 14. In addition to the fresh feed, recycle feed introduced into the process via line 20 is united with regenerated catalyst exiting regenerator 40 via line 22 to form a recycle feed/catalyst reactor feed stream, which is fed to FCC reactor 30 via riser 24. Additionally, steam is introduced into FCC reactor 30 via line 26 to maintain proper fluidization in FCC reactor 30. The fresh feed and recycle streams are catalytically cracked in risers 14 and 24 and in FCC reactor 30, converting a predominantly 650°F plus hydrocarbon feedstock into distillate products. The distillate product is removed from FCC reactor 30 in line 28.

The spent catalyst is separated from the hydrocarbon/catalyst mixture in stripper section 32 of FCC reactor 30 and is then fed to standpipe 34 for transport to regenerator 40. In standpipe 34, the spent catalyst flows from the bottom of stripper section 32 of FCC reactor 30 to the bottom of an internal sealwell 37 located near the external wall of regenerator 40. The spent catalyst is then fed into connecting internal standpipe 41 for transport to the bottom of internal standpipe 44 located in the radial center of regenerator 40. Flow in standpipe 34 is controlled via slide valve 36.

Spent catalyst discharging from slide valve 36 accumulates in sealwell 37 to a level such that the static head pressure of the fluidized catalyst in sealwell 37 and internal standpipe 41 overcomes the frictional and static head pressure drop of liftwell 44 and the regenerator fluidized bed above it. The fluidized catalyst level in sealwell 37 is self-adjusting so that the above is true for any combinations of flow and catalyst density in liftwell 44 and internal standpipe 41. The extended length of sealwell 37 assures that it will not overflow during normal operation.

Because of the steep angle of internal standpipe 41, the pressure buildup in this standpipe is maximized, which in turn has the effect of maximizing the pressure differential across slide valve 36, thereby improving controllability of flow in standpipe 34.

Fluidization air is provided to the bottom of the liftwell through air distributor 42. Fluidization air provided to air distributors 42 and 39 and aeration air to aid the flow of the spent catalyst in standpipe 41 is provided via line 60. Once the spent catalyst arrives at the top of liftwell 44, it is fed to catalyst distributor 46. Although any type of catalyst distributor can be used, the preferred distributor is a series of radially extending, downward sloping troughs. The catalyst flows down the troughs and is dispersed into the fluidized bed of regenerator 40 via fluidizing air which has been introduced into the bottom of troughs via air lines 48. Inside regenerator 40 the spent catalyst is then combusted with air which is fed to regenerator via line 50 and distributed in regenerator 40 with air distribution rings 52. In regenerator 40, the spent catalyst is regenerated by oxidation of deposited coke and subsequently recycled along with the feed streams to FCC reactor 30.

Figure 5 details the lower section of regenerator 40 as depicted in Figure 4. With reference to Figure 5, a more detailed depiction of internal sealwell 37 and liftwell 44, internal standpipe 41, catalyst distributor 46 and air distributors 52 and 48 are shown.

## Configuration 3

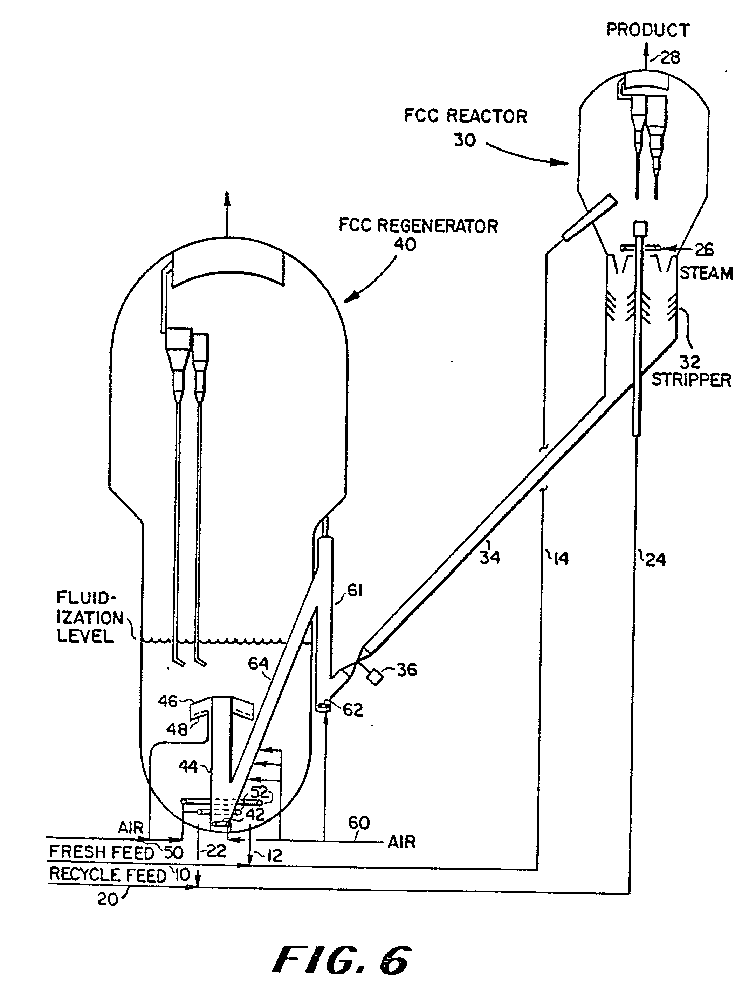

Like configuration 2, configuration 3, as shown in Figure 6, utilizes an intermediate sealwell to help with the transport of the spent catalyst from the bottom of stripper section 32 to the bottom of internal liftwell 44, however in the Figure 6 configuration the intermediate sealwell is externally located. With reference to Figure 6. fresh feed is introduced in the process via line 10. After introduction into the process, the fresh feed is combined with regenerated fluid catalyst which exits regenerator 40 via line 12 to form a combined fresh feed/catalyst reactor feed stream. This combined fresh feed/catalyst stream is then fed to FCC reactor 30 via riser 14. In addition to the fresh feed, recycle feed introduced into the process via line 20 is united with regenerated catalyst exiting regenerator 40 via line 22 to form a recycle feed/catalyst reactor feed stream, which is fed to FCC reactor 30 via riser 24. Additionally, steam is introduced into FCC reactor 30 via line 26 to maintain proper fluidization in FCC reactor 30. The fresh feed and recycle streams are catalytically cracked in risers 14 and 24 and in FCC reactor 30, converting a predominantly 650°F plus hydrocarbon feedstock into distillate products. The distillate product is removed from FCC reactor 30 in line 28.

The spent catalyst is separated from the hydrocarbon/catalyst mixture in stripper section 32 of FCC reactor 30 and is then fed to standpipe 34 for transport to regenerator 40. In standpipe 34, the spent catalyst flows from the bottom of stripper section 32 of FCC reactor 30 to the bottom of an external sealwell 61 located against and outside the external wall of regenerator 40. The spent catalyst is then fed into connecting standpipe 64 for transport to the bottom of internal standpipe 44 located in the radial center of regenerator 40. Flow in standpipe 34 is controlled via slide valve 36.

Spent catalyst discharging from slide valve 36 accumulates in external sealwell 61 to a level such that the static head pressure of the fluidized catalyst in external sealwell 61 and connecting standpipe 64 overcomes the frictional and static head pressure drop of liftwell 44 and the regenerator fluidized bed above it. The fluidized catalyst level in sealwell 61 is self-adjusting so that the above is true for any combinations of flow and catalyst density in liftwell 44 and connecting standpipe 64. The extended length of sealwell 61 assures that it will not overflow during normal operation.

Because of the steep angle of connecting standpipe 64, the pressure buildup in this standpipe is maximized, which in turn has the effect of maximizing the pressure differential across slide valve 36, thereby improving controllability of flow in standpipe 34.

A ventpipe allows fluidization air introduced by distributor 62 to flow into the upper portion of regenerator 40.

Fluidization air is provided to the bottom of liftwell 44 through air distributor 42. Fluidization air provided to air distributors 42 and 62 and aeration air to aid the flow of the spent catalyst in standpipe 64 is provided via line 60. Once the spent catalyst arrives at the top of liftwell 44, it is fed to catalyst distributor 46.

Configuration 4

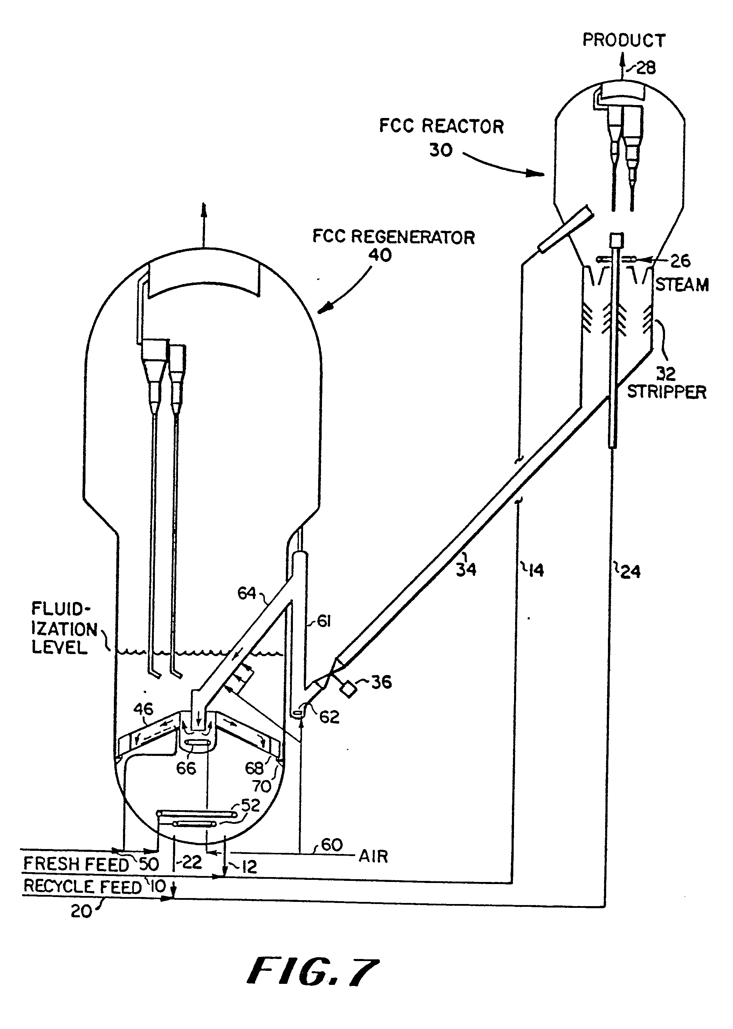

Unlike configurations 1-3, configuration 4, as shown in Figure 7, does not utilize an center internal liftwell but uses an external sealwell and a proboscis-like standpipe to feed the catalyst distributor. With reference to Figure 7, fresh feed is introduced in the process via line 10. After introduction into the process, the fresh feed is combined with regenerated fluid catalyst which exits regenerator 40 via line 12 to form a combined fresh feed/catalyst reactor feed stream. This combined fresh feed/catalyst stream is then fed to FCC reactor 30 via riser 14. In addition to the fresh feed recycle feed introduced into the process via line 20 is united with regenerated catalyst exiting regenerator 40 via line 22 to form a recycle feed/catalyst reactor feed stream, which is fed to FCC reactor 30 via riser 24. Additionally, steam is introduced into FCC reactor 30 via line 26 to maintain proper fluidization in FCC reactor 30. The fresh feed and recycle streams are catalytically cracked in risers 14 and 24 and in FCC reactor 30, converting a predominantly 650°F plus hydrocarbon feedstock into distillate products. The distillate product is removed from FCC reactor 30 in line 28.

The spent catalyst is separated from the hydrocarbon/catalyst mixture in stripper section 32 of FCC reactor 30 and is then fed to standpipe 34 for transport to regenerator 40. In standpipe 34, the spent catalyst flows from the bottom of stripper section 32 of FCC reactor 30 to the bottom of an external sealwell 61 located against the external wall of regenerator 40. The spent catalyst is then fed into standpipe 64 for transport to the catalyst distributor 46. Exiting standpipe 64, the spent catalyst is distributed to the troughs of catalyst distributor 46 by means of fluidization air provided from air distributor 66. Flow in standpipe 34 is controlled via slide valve 36. Fluidization air provided to air distributors 62 and 66 and to aid the flow of the spent catalyst in standpipe 64 is provided via line 60.

In the transport of spent catalyst from the stripper to the distributor troughs within the regenerator, as per the above configurations, the steepest possible angle must be maintained to avoid gas separation from the fluidized gas-solids mixture. Such separation would cause catalyst deaeration and consequent loss of flow. In particular, the steeper the angle of spent catalyst standpipe 34, the less likelihood that deaeration will occur. The minimum angle of inclination of standpipe 34, that will support fluidized flow is dependent on certain catalyst properties such as (1) density and (2) particle size distribution as well as other process variables. Deaeration can also occur as a result of changes in direction of the transport piping in the horizontal plane and therefore such piping directional changes are to be avoided.

Employment of liftwell 44 and sealwell 37 or 61 provide a means of overcoming the tendency for deaeration. In the preferred arrangement, the discharge of the stripper is oriented such that the spent catalyst standpipe intersects a single liftwell located in the center of the regenerator (Fig. 2). In the case of modification of prior FCCU installations that do not economically allow reorientation of the stripper bottom discharge, or which may be possessed of other interferences or considerations which prevent a straight and steep conveyance to a single center well, employment of a sealwell, located either internal or external to the regenerator and being additional to the regenerator internal center liftwell allows adherence to the above-discussed concepts that promote flow (Fig. 4 and Fig. 6). Aeration is provided at the base of the liftwell and sealwell to keep the catalyst in a fluidized condition. The sealwells 37 and 61 are vented at their tops in order that the aeration gas does not pocket at the top of the sealwell and inhibit flow. The vent gas from external sealwell 61 is introduced back into the regenerator.

A principal problem that was overcome in each of the liftwell and sealwell designs is the stress and strain that results when equipment that is fabricated and installed at ambient temperatures is elevated to an operating temperature of 1300-1350°F. The growth of the constituent metal components due to thermal expansion and the simultaneous decrease in the strength of those components necessitates that, where possible, parts should not be restrained in the direction of their thermal growth. The liftwell and sealwells pose no severe problem in this regard as they are free to grow, since at least one end need not connect with any particular other component.

The elongation of the internal spent catalyst standpipe due to thermal expansion does require particular attention since it, of necessity, is restrained at both ends by connecting piping. Therefore, the internal spent catalyst standpipe is provided with a unique joint that allows for thermal expansion, rotation and misalignment. The "slip joint" takes into account the thermal growth and movement of the internal spent catalyst stand pipe relative to its juncture with the regenerator center well. Without provision to accommodate the elongation, the twist and the transverse movement of the internal spent catalyst standpipe resulting from its own thermal expansion, as well as the thermal expansion of the regenerator shell, stresses transmitted to the center well and in turn to the bottom head of the regenerator and stresses transmitted to the regenerator side wall in the area at the entrance of the internal spent catalyst standpipe would exceed allowable limits for safe operation of the equipment. Stresses reduced in the piping itself would also be unmanageable.

The strength of the materials involved, and thus the allowable stresses, become very much reduced as temperature increases above 650°F. Moreover, confining the lower end of the internal spent catalyst standpipe would result in translation of such thermal expansion stress load to the bottom head of the regenerator at the area required to also carry the gravitational load of the center well in addition to carrying a major portion of the load of the materials in process. These combined loads would result in design shell thicknesses which would be impractical to economically fabricate and install. This phenomenon is somewhat analagous to and is addressed in that instance in the case of the external standpipe by means of a commercially available expansion joint which would be unsuitable for use within the regenerator because the expected short service life of its requisite external bellows is unacceptable.

The slip joint uses a braided stainless steel hose, employed as a packing material, which is compressed upon installation. An important aspect of the slip joint is the specific amount of that compression. A higher operating pressure exists within the internal spent catalyst standpipe than occurs immediately outside it in the vicinity of the slip joint in normal operation and full metal-to-metal contact of the braided hose packing to the annulus walls must be maintained over the entire circumferential perimeter of the seal area to assure that catalyst flow will not initiate through the annulus. Once catalyst flow through the annulus were to begin, there would be a tendency for erosion to occur due to the abrasive nature of the catalyst material. Significant wearing of a channel through the annulus would thereby be a possibility and the eventual short-circuiting of catalyst flow would adversely affect the intended process performance of the equipment since spent catalyst would discharge almost directly into the withdrawal lines 22 and 12.

On the other hand, excessive compression of the braided hose packing could result in loss of resiliency and the packing would then not expand to fill gaps occurring during angular misalignment of the internal spent catalyst standpipe during heatup to operating temperature. The extent of compression of the braided hose packing is controlled by (1) the radial clearance within the annular space between the nozzle extension of the center well and the protruding end of the internal spent catalyst standpipe and by (2) the design amount of protrusion of the follower ring into the annulus.

The follower ring also assures that the braided hose packing material cannot inadvertently dislodge from the annular space during operation of the equipment. The follower ring features a positive stop which assures that, upon installation, the total compression of the braided hose packing is as designed. The compression fit of the braided hose packing within the slip joint annular space results in the occurrence of a frictional resistive force between the braided hose packing and the surface of the internal spent catalyst standpipe as thermal expansion elongates the internal spent catalyst standpipe on startup and shutdown. This force is trivial, however, as compared to the strengths of the various components involved and is of little consequence. It does not significantly inhibit the 4"-5" axial motion of the internal spent catalyst standpipe as operating temperature is reached.

An important consideration is, however, the effect of the frictional forces on the integrity of the packing material itself since the tendency of this motion to tear, gall and dislodge the packing is obviously an undesirable event. The remaining compressibility of the packing material accommodates this tendency by allowing the packing material to deflect under load rather than compelling the material to suffer the damaging effects above-described. A further feature of the slip joint is the redundance of the convolutions of packing material. This feature assures that should localized tearing, abrading or other such damage in fact inadvertently occur, then an inside-to-outside open channel would still not exist. An additional feature of the slip joint is the application of a hard surfacing layer to inhibit erosion should the above measures fail to assure the integrity of the braided hose packing as a sealing member.

With reference to Figure 2, both spent catalyst standpipe 34 and center liftwell 44 undergo significant thermal expansion in different directions as they heat up from shutdown to operating temperatures. Success of the invention is dependent upon providing a means of avoiding enormous stresses that would be generated in a fixed system. Conventional technology for alleviating such stresses in catalyst standpipes and risers is to employ bellows like expansion joints. These expansion joints have proved satisfactory in services where the exterior of the joint is exposed to the atmosphere. The usage of such an expansion joint was considered for service on the internal regenerator portion of standpipe 34 between liftwell 44 and the external wall of regenerator 40, but such a use was rejected because of the possibility of catalyst packing

8

the bellows and other moving parts and thus prevent its proper operation.

The optimum solution is a sliding joint. In this arrangement, referring to Figure 3, spent catalyst standpipe 34 is rigidly attached to the wall of regenerator 40 using a thermal sleeve arrangement 35. The juncture between standpipe 34 and liftwell 44 is arranged as a slide joint 45 so that the major thermal expansion of standpipe 34 along its longitudinal axis can be accommodated as well as the slight angular misalignment caused by the differences in the expansion of liftwell 44 and the regenerator wall 40.

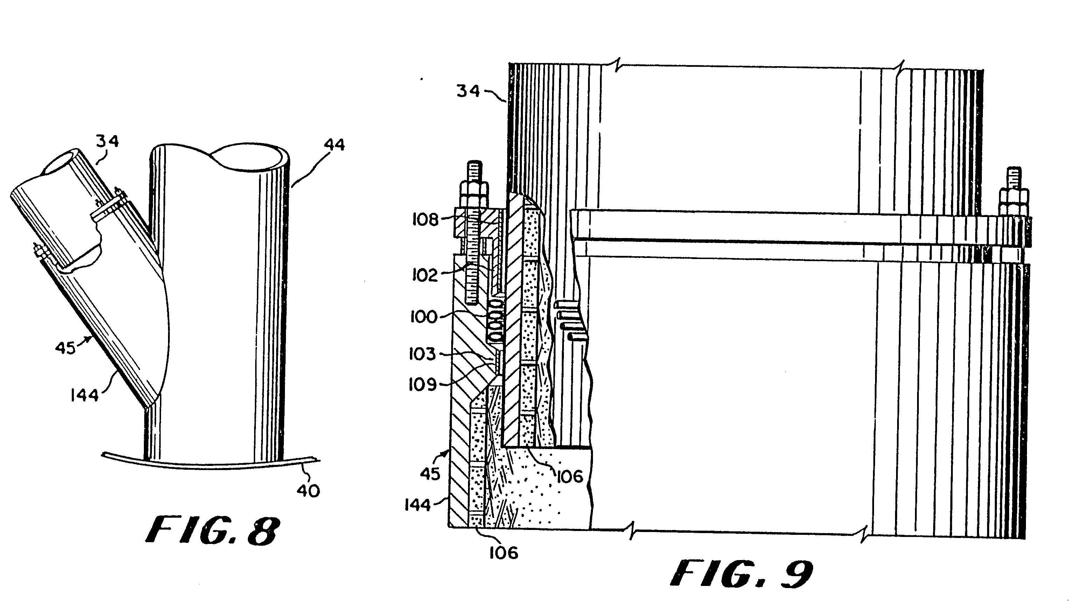

As shown in Figure 8, slide joint 45 includes standpipe 34 arranged as a male piece inserted into female socket 144 which is constructed as an integral part of liftwell 44. Reasonable clearances are needed between standpipe 34 and socket 144 to accommodate angular misalignment and to allow for ease of construction.

Since the operating pressure at the standpipe-liftwell juncture is higher than within the regenerator, catalyst would flow through the clearance provided and erode the joint unless means are provided to reduce or eliminate catalyst flow. Purging as is conventionally used for expansion joints proved to be unacceptable due to uneven flow patterns through the annulus which is at an angle to the vertical. Therefore as a solution, the annular space between spent catalyst standpipe 34 and socket 144 is closed by the use of specially designed packing 100. This packing is constructed of flexible stainless steel braided hose and is filled with a ceramic fiber "wool". The packing is designed to be slightly compressed under conditions of cold assembly. The packing is retained between packing retention ring 102 and packing retention land 103, which are designed to place axial compression on packing 100. Packing retention ring 102 is installed with conventional bolting techniques. The interior surfaces 108 and 109 of packing retention ring 102 and packing retention land 103 are surface hardened to prevent galling in the event of metal to metal contact. Finally, as is customary in such applications, standpipe 34 and liftwell 44 are lined with hexmesh and refractory system 106 for erosion protection.

In order to show the efficacy of the present invention, the FCC processes as depicted in Figures 1 and 2 were computer simulated to estimate the product yields and quality thus in turn determining the benefit the present invention has on the operation of the FCC process.

For the purposes of the computer simulations of the Figure 1 and Figure 2 processes, a feed of 23.6 °API gas oils composed of virgin and preprocessed materials was assumed. Physical and chemical properties of the total feed stock are as shown in the following Table I.

Table I
API Gravity: °API    23.6
Sulfur: wt%    1.34
Basic Nitrogen: wppm    277
Conradson Carbon Residue: wt%    0.67


Distillation: °F

| IBP | 455 |
| 10% | 645 |
| 30% | 729 |
| 50% | 799 |
| 70% | 891 |
| 90% | 1000 |


Metals

Iron: wppm    0.40
Nickel: wppm    0.45
Vanadium: wppm    0.88
Aniline Point: °F    175

Also used in the computer simulations is an equilibrium catalyst with a microactivity of 68 with a fresh catalyst makeup rate of 0.2 lb/BBL for the process of Figure 2 and an equilibrium catalyst with a microactivity of 63 at a fresh catalyst makeup rate of 0.2 lb/BBL for the process of Figure 1. The results of the simulations are shown in the following Table 11.

## Table II

|  | Figure 1 Process | Figure 2 Process |
|---|---|---|
| **Operating Conditions** | | |
| Riser Outlet Temperature: °F | 972 | 972 |
| Regen. Dense Bed Temp.: °F | 1,318 | 1,322 |
| Feed Preheat Temperature: °F | 540 | 478 |
| Cat./Oil Ratio: wt/wt | 4.8 | 5.2 |
| Catalyst Circulation Rate: T/M | 41.9 | 45.7 |
| Throughput Ratio: vol/vol | 1.05 | 1.05 |
| Excess Oxygen: vol% | 3.8 | 2.0 |
| Combustion Air/Fresh Feed: lb/hr/BPSD | 11.04 | 11.03 |
| **Predicted Yields** | | |
| Conversion: wt% | 65.7 | 70.7 |
| Yields | | |
| Gasoline: wt% | 40.8 | 43.5 |
| $C_4$'s: wt% | 9.4 | 10.6 |
| $C_3$'s: wt% | 5.1 | 5.8 |
| Light Cycle Oil: wt% | 20.2 | 17.5 |
| Heavy Cycle Oil: wt% | 14.1 | 11.8 |
| Coke: wt% | 6.0 | 6.1 |
| $C_2$ and Lighter: wt% | 4.0 | 4.2 |
| Hydrogen Sulfide: wt% | 0.4 | 0.5 |
| Total $C_3^+$ Liquids: vol% | 105.4 | 106.2 |

As can be seen from Table 11, the use of a catalyst distributor as depicted in the Figure 2 process, results in a substantial improvement in product yields. First the process according to Figure 2 produces more gasoline in comparison to the process according to Figure 1, it results in a higher volume yield of $C_3^+$ liquids and it, additionally, reduces the amount of cycle oils produced. These benefits are the result of increased catalyst microactivity and improved utilization of combustion air by reducing the amount of excess oxygen required to suppress afterburning of CO in the dilute phase of the regenerator.

The present invention has been described with reference to several preferred embodiments thereof. These embodiments should not been seen as a limitation of the scope of this invention, the scope of which is ascertained by the following claims:

## Claims

1. In a process for the catalytic cracking of a hydrocarbon feed, the hydrocarbon feed selected from the group consisting of gas oil, vacuum gas oil, cycle oil, residua and mixtures thereof, in a fluid catalytic cracking unit having a fluidized bed regenerator and a reactor, wherein the hydrocarbon feed is contacted with a cracking catalyst at elevated temperatures thus cracking a majority of the hydrocarbon feed to distillate products and in addition producing a spent catalyst laden with coke, the spent catalyst is removed from the reactor and is regenerated by combustion with air in the regenerator, and the regenerated catalyst is recycled to the reactor, the improvement comprising

using a regenerator which is side by side with the reactor in the fluid catalytic cracking unit and wherein air is introduced into the bottom of the regenerator for forming a fluidized bed characterized as being rich in oxygen in the lower portion of the fluidized bed and essentially depleted of oxygen in the upper portion of the fluidized bed; and

introducing and distributing the spent catalyst to the upper portion of the fluidized bed of the regenerator, wherein the air used for combustion is essentially depleted of oxygen,

thereby allowing the coke on the spent catalyst to burn off at a controlled rate such that the catalyst temperature is maintained at a level to avoid sintering of the catalyst and to prevent the release of steam in the lower portion of the fluidized bed.

2. The process according to Claim 1 wherein the spent catalyst is introduced and distributed to the upper portion of the regenerator fluidized bed wherein the air used for combustion is essentially depleted of oxygen by flowing the spent catalyst from the bottom of the reactor through a downward sloping standpipe and a vertical liftwell located in the center of the lower portion of the regenerator; and feeding the spent catalyst from the top of the vertical liftwell to a catalyst distributor.

3. The process according to Claim 1 wherein the spent catalyst is introduced to the upper portion of the regenerator fluidized bed wherein the air used for combustion is essentially depleted of oxygen by flowing the spent catalyst from the bottom of the reactor through a series of connected conduits, said connected conduits in sequential order comprising a downward sloping standpipe, an internal vertical sealwell located near an external wall of the regenerator, an internal downward sloping standpipe, and an internal vertical liftwell located in the center of the lower portion of the regenerator; and feeding the spent catalyst from the top of the vertical liftwell to a catalyst distributor.

4. The process according to Claim 1 wherein the spent catalyst is introduced to the upper portion of the regenerator fluidized bed wherein the air used for combustion is essentially depleted of oxygen by flowing the spent catalyst from the bottom of the reactor through a series of connected conduits, said connected conduits in sequential order comprising a downward sloping standpipe, an external vertical sealwell located near an external wall of the regenerator, an internal downward sloping standpipe, and an internal vertical liftwell located in the center of the lower portion of the regenerator; and feeding the spent catalyst from the top of the vertical liftwell to a catalyst distributor.

5. The process according to Claim 1 wherein the spent catalyst is introduced to the upper portion of the regenerator fluidized bed wherein the air used for combustion is essentially depleted of oxygen by flowing the spent catalyst from the bottom of the reactor through a series of communicating conduits, said communicating conduits in sequential order comprising a downward sloping standpipe, an external vertical sealwell located near an external wall of the regenerator connected to the downward sloping standpipe, and an internal downward sloping proboscis-like standpipe connected to the external vertical sealwell; and feeding the spent catalyst from the unconnected end of the internal downward sloping standpipe to a center well which is connected to and supported by a catalyst distributor and which in turn feeds the spent catalyst to the catalyst distributor, wherein the catalyst distributor is supported by the regenerator side wall.

6. A slip joint for permitting movement between two generally elongated cylindrical members of larger and smaller diameter axially aligned one inside the other comprising in combination:

a packing comprising a flexible elongated tubular member filled with a fiberous insulating material disposed between the cylindrical members to provide a seal therebetween as the members move relative to one another; and
means to retain the packing between the cylindrical members.

7. The slip joint according to Claim 6 wherein the flexible tubular member is a braided stainless steel hose.

8. The slip joint according to Claim 6 wherein the fibrous insulating material is ceramic fiber wool.

9. The slip joint according to Claim 6 wherein the means to retain such packing includes an annular retention land (protrusion) on the inner surface of the large diameter cylindrical member proximate an end thereof where the smaller diameter cylindrical member enters the larger diameter cylindrical member and a packing retention ring fixed to the end of the larger diameter cylindrical member to hold the packing between it and the retention land.

10. An apparatus, for use in an FCC unit having a side by side regenerator and reactor, the reactor having a stripper, for removing a spent catalyst from the reactor stripper and introducing and distributing the spent catalyst to an upper portion of a fluidized bed of the regenerator, wherein air used for combustion is essentially depleted of oxygen and air is introduced into the bottom of the regenerator for forming a fluidized bed characterized as being rich in oxygen in the lower portion of the fluidized bed and essentially depleted of oxygen in the upper portion of the fluidized bed, comprising a series of connecting conduits, said connecting conduits in sequential order comprising a downward sloping standpipe from the reactor stripper terminating at an internal vertical liftwell located in the center of the lower portion of the regenerator; a slip joint connecting the downward sloping standpipe and the vertical liftwell; and a catalyst distributor supported by the internal vertical liftwell.

11. An apparatus, for use in an FCC unit having a side by side regenerator and reactor, the reactor having a stripper, for removing a spent catalyst from the reactor stripper and introducing and distributing the spent catalyst to an upper portion of a fluidized bed of the regenerator, wherein air used for combustion is essentially depleted of oxygen and air is introduced into the bottom of the regenerator for forming a fluidized bed characterized as being rich in oxygen in the lower portion of the fluidized bed and essentially depleted of oxygen in the upper portion of the fluidized bed, comprising a series of connecting conduits, said connecting conduits in sequential order comprising a downward sloping standpipe from the reactor stripper terminating at a vertical sealwell located near an external wall of the regenerator; an internal downward sloping standpipe connecting the vertical sealwell and terminating at an internal vertical liftwell located in the center of the lower portion of the regenerator; a slip joint connecting the internal downward sloping standpipe and the vertical liftwell; and a catalyst distributor supported by the internal vertical liftwell.

12. The apparatus according to Claim 11 wherein the sealwell is located externally to the regenerator.

13. The apparatus according to Claim 12 wherein the sealwell in located internally in the regenerator.

14. An apparatus, for use in an FCC unit having a side by side regenerator and reactor, the reactor having a stripper, for removing a spent catalyst from the reactor stripper and introducing and distributing the spent catalyst to an upper portion of a fluidized bed of the regenerator, wherein air used for combustion is essentially depleted of oxygen and air is introduced into the bottom of the regenerator for forming a fluidized bed characterized as being rich in oxygen in the lower portion of the fluidized bed and essentially depleted of oxygen in the upper portion of the fluidized bed, comprising a series of communicating conduits, said communicating conduits in sequential order comprising a downward sloping standpipe from the reactor stripper terminating at an external vertical sealwell located near an external wall of the regenerator connected to the downward sloping standpipe; an internal downward sloping proboscis-like standpipe connected to the external vertical sealwell; a center well which is connected to and supported by a catalyst distributor and in communication with the downward sloping standpipe; and the catalyst distributor, wherein the catalyst distributor is supported by the regenerator side wall.

0 289 991

PRODUCT
28

FCC REACTOR
30

FCC REGENERATOR
40

26
STEAM

32
STRIPPER

FLUID-
IZATION
LEVEL

34    14    24

36

38

52

AIR
FRESH FEED 50    22    12
RECYCLE FEED 10
20

**FIG. I**

PRIOR ART

0 289 991

PRODUCT

28

FCC REACTOR
30

FCC REGENERATOR
40

26
STEAM

32
STRIPPER

FLUID-
IZATION
LEVEL

34    14    24

46
48    44

36

52
42

AIR

60
AIR

FRESH FEED 50    22    12

RECYCLE FEED 10

20

*FIG.2*

FIG. 3

PRODUCT

28

FCC REACTOR
30

FCC REGENERATOR
40

26
STEAM

32
STRIPPER

37

34

14

24

FLUID-
IZATION
LEVEL

41

46

48

36

39

44

52

42

AIR

FRESH FEED 50

22

12

60 AIR

RECYCLE FEED 10

20

*FIG. 4*

**FIG. 5**

0 289 991

PRODUCT
28

FCC REACTOR
30

FCC REGENERATOR
40

26
STEAM

32
STRIPPER

FLUID-
IZATION
LEVEL

61

34   14   24

64

36

46

62

48

44

52

42

AIR

60

FRESH FEED 50   22   12   AIR

RECYCLE FEED 10

20

*FIG. 6*

PRODUCT
28

FCC REACTOR
30

FCC REGENERATOR
40

26
STEAM

32
STRIPPER

34    14    24

64

61

FLUID-
IZATION
LEVEL

46

36

62

66    68

70

52

60    AIR

FRESH FEED 50    22    12
RECYCLE FEED 10
20

*FIG. 7*

FIG. 8

FIG. 9

0 289 991